# EUROPEAN PATENT APPLICATION

(11) **EP 0 573 932 A2**
(43) Date of publication of application: **15.12.1993**
(21) Application number: 93109099.7
(22) Date of filing: 07.06.1993
(51) Int. Cl.: H04N 5/63

(54) **Television with lamp supplied in alternating current being of variable frequency**

(30) Priority: 12.06.1992 IT TO920502
(71) Applicant: SELECO S.p.A., I-33170 Pordenone (IT)
(72) Inventor: Ret, Luigi, I-33084 Cordenons (PN) (IT)
(74) Representative: Dini, Roberto, Dr. Ing.

(57) **Abstract**

The present invention refers to a television equipped with a lamp supplied in alternating current; the main characteristic of the invention consists in that said alternating current is of variable frequency.

## Description

The present invention refers to a television equipped with a lamp supplied in alternating current.

It is known that in the past televisions have been proposed with a small lamp arranged at the rear of the apparatus for supplying a diffused background light source, in order to consent a more restful viewing of the television image.

Such lamp was in the past subject to the main on-off switch of the television, so as to be switched on together with the apparatus and to be switched off when to the apparatus was. Now, with the wide spread use of remote control units, in reality the television is no longer switched off by numerous users, who prefer to always leave it in stand-by; this creates a problem for the lamp, that would remain on.

The aim of the present invention is that of indicating a simple and cheap system for switching on the background lamp together with the television, in order that it is switched on only when the television is operative and switched off also when the apparatus is put in the stand-by position.

For allowing such aims the present invention has as its subject a television equipped with a lamp supplied in alternating current, characterised in that said alternating current is of variable frequency.

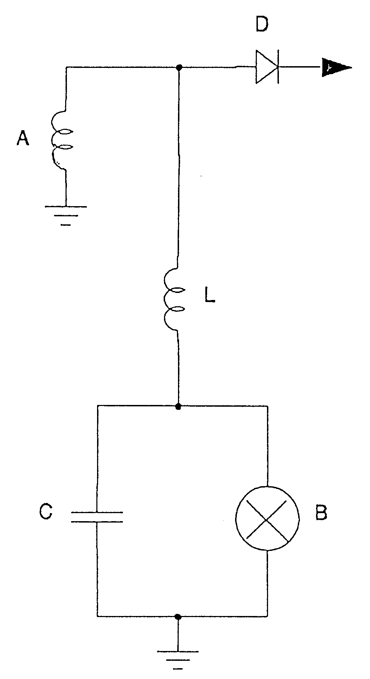

Further aims and advantages of the present invention will result in being clear from the detailed description that follows and from the annexed drawings, supplied purely as an explanatory and non-limiting example, wherein:
The figure represents the supply diagram of the lamp coupled to the television according to invention.

In the figure with the reference letter A a coil is shown of the supply transformer of the commutation type (switch-mode); such coil, pertinent to the secondary circuit of the transformer, supplies, through a rectifier diode D the circuits of the television, in particular the final line stage of the television.

Such type of known supply is that more widely used on televisions actually produced.

With the reference letter L an inductance of the value of 4 millihenry is shown, connected at one side to the end not earthed of the coil A, and at the other side to the parallel of a capacitor C and a lamp B; these two elements are then connected at the other side to the earth of the chassis, that is insulated from the mains.

The capacitor C is of a value of 2,2 nanofarad; the lamp B is a normal fluorescent lamp having the power of approximately 5 watts; which for example may be of the type 2L-5W by the company OSRAM or of the type TL-4W by Philips.

The switched supply circuit normally works at the frequency of 30 kilohertz; across the coil A about 300 volts are available.

When the receiver is placed in the stand-by position the frequency climbs to about 70Khz.

The functioning of the described circuit is the following:
- under normal functioning the voltage at the terminal of the lamp is such to switch it on normally;
- in the stand-by position, due to the effect of the increase of frequency, the impedance of the inductance L increases to more than four times, and at the same time reduces the impedance of the capacitor C; as a consequence the voltage at the terminals of the lamp decreases to a value practically insignificant and the lamp remains dormant;
- the inductance L also acts as a current limiter under normal functioning conditions.

The characteristics of the television subject of the invention result in being clear from the description of the example. From the present description the advantages of the television subject of the present invention are also clear.

In particular they consist in that with the addition of only two simple components (inductance L and capacitor C) the desired effect is obtained: the lamp on in normal functioning and the lamp off in the stand-by condition, without any further commutation.

Furthermore the lamp, as opposed to those normally connected to the light mains, is insulated from the mains.

It is clear that numerous variations are possible by the skilled-man, to the television described by way of example, without departing from the novelty principles inherent in the invention.

## Claims

1. Television equipped with a lamp (B) supplied in alternating current, characterised in that said alternating current is of variable frequency.

2. Television, according to claim 1, characterised in that said lamp (B) is supplied by a coil (A) of the supply transformer of the commutation type (switch-mode), and that the commutation frequency of said supplier increases in the stand-by condition, if compared to that of the normal functioning condition.

3. Television, according to claim 2, characterised in that said lamp (B) is supplied by said coil (A) through an inductance (L).

4. Television, according to claim 3, characterised in that said inductance (L) has the value of about 20 mH.

5. Television, according to claim 1 or 2, characterised in that in parallel to said lamp (B) a capacitor (C) is connected.

6. Television, according to claim 5, characterised in that said capacitor has the value of about 47 nF.

7. Television, according to claim 1, characterised in that said lamp is of the cold cathode type.

8. Television, according to claim 1, characterised in that said lamp is insulated from electric mains supply.
